# EUROPÄISCHE PATENTANMELDUNG

(11) **EP 1 145 630 A1**
(43) Veröffentlichungstag der Anmeldung: **17.10.2001**
(21) Anmeldenummer: 01101028.7
(22) Anmeldetag: 18.01.2001
(51) Int. Cl.: A01K 13/00

(54) **Viehputzeinrichtung**

(30) Priorität: 11.04.2000 DE 20006658 U
(71) Anmelder: SUEVIA HAIGES GMBH & CO., 74366 Kirchheim a.N./Württ. (DE)
(72) Erfinder: HAIGES, Frank, 74366 Kirchheim/ Neckar (DE)
(74) Vertreter: Wolff, Michael, Dipl.-Phys.

(57) **Zusammenfassung**

Um bei einer Viehputzeinrichtung mit einer Bürstvorrichtung (10, 12) an einer wand- oder pfostenfesten Lagervorrichtung (18) und einem im Wesentlichen L-förmigen Rahmen (14) mit zwei Schenkeln (14v und 14w) zur Anordnung einer ungefähr vertikalen Bürste (10v) bzw. einer ungefähr waagrechten Bürste (10w), und mit einem elektromotorischen Antrieb (16) der Bürsten (10v und 10w) ein Aufwickeln des Tierschwanzes durch drehbare walzenförmige Bürsten (DE 91 03 341 U1 / DE 1 97 34 289 C1) zu verhindern, wird vorgeschlagen, rahmenfeste flache Bürsten (10w und 10v) und einen Vibrator (46) zum Antrieb des Rahmens (14) zu verwenden (Fig.1).

## Beschreibung

Die Erfindung betrifft eine Einrichtung gemäß Oberbegriff des Anspruches 1.
Bei einem gattungsgleichen, aus der DE 91 03 341 U1 bekannten Gerät zum Putzen von Rindern, z. B. Kühen, haben die zwei walzenförmigen Bürsten kreiszylindrische Umfänge. Deshalb sind die beiden Bürsten um ihre vertikale bzw. waagrechte Zylinderachse drehbar am L-förmigen Rahmen gelagert, der mittels eines Parallelogrammgestänges höhenverstellbar an einer Wand angelenkt ist. Zum gemeinsamen Antrieb der Bürsten gehört eine durch ein Gelenk geteilte Welle, die über eine Transmission vom Elektromotor mit Getriebe gedreht wird, den ein "Reflexionslichttaster" ein- und ausschaltet.
An dieser bekannten Viehputzeinrichtung ist nachteilig, dass sich trotz vorhandenen Lagerschutzes der Bürstenenden Haare am Schwanzende des sich selbst putzenden Tieres (Kuh) in einer Bürste verfangen können und womöglich der Schwanz aufgewickelt wird, da zwischen L-förmigem Rahmen und Bürsten je ein beträchtlicher Spalt besteht. - Die Gefahr des Schwanzaufwickelns besteht auch bei der Viehputzmaschine gemäß DE 1 97 34 289 C1 mit einer schräg angeordneten Bürstenwalze, deren Umfangsfläche ein konkaves Profil aufweist. Um diese Gefahr zu beseitigen, sind schon selbsttätige Umsteuerungen auf Stopp und begrenzten Rücklauf der Antriebswelle vorgeschlagen worden, wobei aber die erforderliche aufwendige Elektronik insbesondere in ammoniakhaltiger Stallluft nicht störungsfrei arbeitet.

Der Erfindung liegt daher die Aufgabe zugrunde, unter Vermeidung der genannten Nachteile eine Viehputzeinrichtung der eingangs genannten Art zu schaffen, welche ein Aufwickeln des Tierschwanzes ausschließt.
Diese Aufgabe ist erfindungsgemäß durch die kennzeichnenden Merkmale des Anspruches 1 gelöst. Durch rahmenfeste flache Bürsten und einen Vibrator zum Antrieb des Rahmens wird vorteilhafterweise erreicht, dass die Bürsten sich nicht drehen, sondern vibrieren und den Tierschwanz nicht angreifen, sollte er zufällig mit den Bürsten in Berührung kommen; und dass das Tierfell an Kopf, Rücken und Flanken des Tieres nicht nur geputzt, sondern zugleich durch harte Borsten massiert wird, was die Tiere als so angenehm empfinden, dass sie den Putzstand des Viehstalles von alleine aufsuchen.

Bevorzugte Ausführungsformen und Weiterbildungen der erfindungsgemäßen Einrichtung sind in den Ansprüchen 2 bis 5 charakterisiert:
Bei einer ersten Ausführungsform ist vorgesehen, dass der L-förmige Rahmen am unteren Ende seines ungefähr vertikalen Schenkels begrenzt schwenkbar an einem Gestell angeordnet ist und ein Anheben des ungefähr waagrechten Rahmen-Schenkels den Vibrator einschaltet. - Im Falle der DE 197 34 289 C1 kann der Antriebsmotor der taillierten Bürstenwalze durch Hochschwenken der schrägstehenden Walze in Gang gesetzt werden, während ihn der Rückfall der Walze wieder außer Betrieb nimmt.
Bei einer zweiten Ausführungsform ist vorgesehen, dass der L-förmige Rahmen im Wesentlichen vertikal begrenzt verschiebbar an einem Gestell angeordnet ist und ein Anheben des ungefähr waagrechten Rahmen-Schenkels den Vibrator einschaltet. - Diese Ausführung ist besonders geeignet, wenn Tiere weitgehend unterschiedlicher Rückenhöhe geputzt werden sollen.

Es ist zwar aus der DE 299 16 663 U1 eine "Viehputzmaschine mit einer rotierenden Bürstenwalze und einer (relativ) feststehenden Kratzbürste, montiert auf einem in vertikaler Richtung beweglichen Schlitten" bekannt gewesen, welcher an Zugfedern hängt. Diese Maschine beseitigt aber das der Erfindungsaufgabe zugrundeliegende Problem ebenfalls nicht.

Im Folgenden ist die Erfindung anhand der zwei durch die Zeichnung beispielhaft dargestellten bevorzugten Ausführungsformen der erfindungsgemäßen Viehputzeinrichtung im Einzelnen erläutert. Es zeigt in schematischer Darstellung
- Fig. 1: die erste Ausführungsform perspektivisch
und

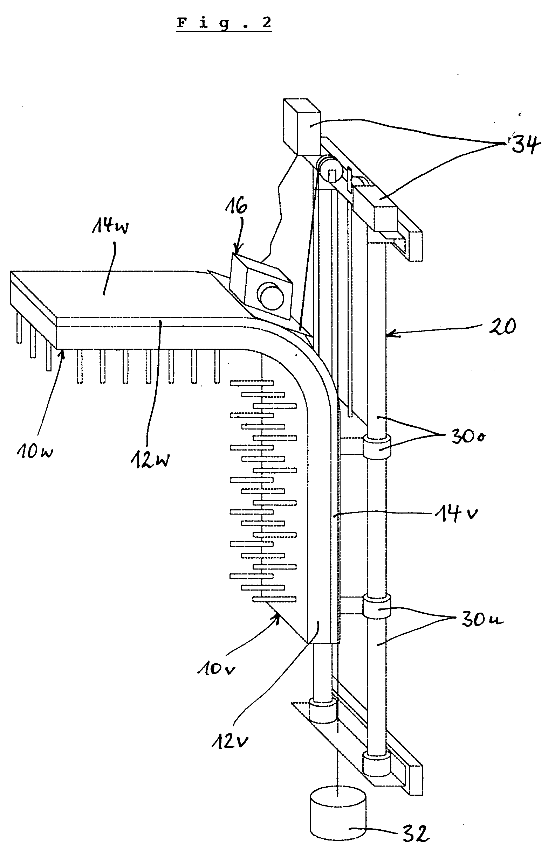

- Fig. 2: die zweite Ausführungsform perspektivisch

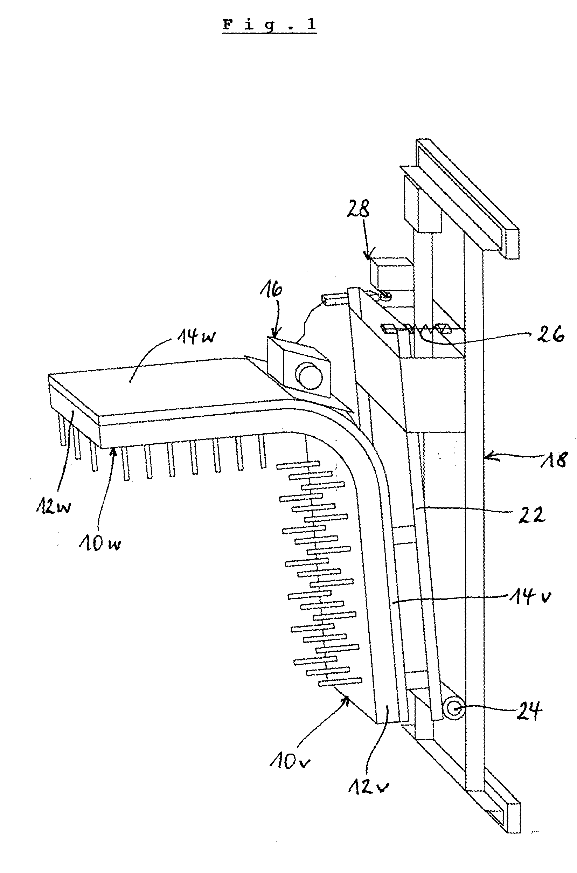

In beiden Ausführungsbeispielen besteht die Bürstvorrichtung aus zwei rechtwinklig zueinander angeordneten flachen Bürsten 10w und 10v mit gröberen bzw. feineren Borsten und Rücken 12w und 12v, die viertelkreisförmig ineinander übergehen, sodass die Bürstvorrichtung L-Form hat. Dementsprechend sind die beiden Bürsten 10w und 10v mit zwei rechtwinklig zueinander angeordneten flacheren Schenkeln 14w bzw.14v eines L-förmigen Rahmens 14 mit passend gerundeter Ecke versehen. Dabei sind die Bürstenrücken 12w und 12v auf den Innenseiten der Rahmenschenkel 14w bzw. 14v befestigt. Die gerundete Rahmenecke trägt auf ihrer Außenseite einen Vibrator 16 mit elektrischem Netzanschluss als Antrieb der Bürsten 10,deren Borsten Schwingungen ausführen.
Der Rahmen 14 ist in unterschiedlicher Weise an einem Gestell 18 bzw. 20 angeordnet, das z. B. an einer Stallwand verankert ist:
Im ersten Ausführungsbeispiel weist das Gestell 18 eine Wippe 22 auf, die um eine untere, waagrechte Achse 24 begrenzt schwenkbar ist, und zwar zwischen einer vertikalen und einer ca. 15° davon abweichenden Stellung, die durch Anschläge festgelegt sind, wobei eine Druckfeder 26 die Wippe 22 in ihre abweichende Stellung drängt. An der Wippe 22 ist parallel zu ihr der eine Rahmenschenkel 14v befestigt, sodass dieser im Wesentlichen vertikal und der andere Rahmenschenkel 14w im Wesentlichen waagrecht angeordnet ist, was auch für die Bürsten 10v bzw. 10w gilt. - Unter dem Einfluss der Schwerkraft und der Trennkraft der Feder 26 divergieren die ungefähr vertikal angeordnete Bürste 10v und die wandfesten Gestellteile nach oben, wie in Fig. 1 zu sehen ist. Durch Anheben der ungefähr waagrecht angeordneten Bürste 10w wird die Bürstvorrichtung gegen die Lagervorrichtung geschwenkt, wobei die Feder 26 komprimiert und ein elektrischer Schalter 28 von der Wippe 22 betätigt wird, welcher den Vibrator 16 in Betrieb setzt.
Im zweiten Ausführungsbeispiel weist das Gestell 20 der Lagervorrichtung eine obere und eine untere vertikale Führung 30o bzw. 30u des vertikalen Rahmenschenkels 14v auf, sodass die Bürstvorrichtung senkrecht zum waagrechten Rahmenschenkel 14w auf und ab verschoben werden kann, was ein Gegengewicht 32 erleichtert. Beim vertikalen Anheben der waagrechten Bürste 10w wird zur Inbetriebnahme des Vibrators 16 ein elektrischer Schalter 34 betätigt, bei dem es sich um einen einstellbaren Annäherungsschalter handeln kann, sodass eine Mindestanhebung zum Einschalten genügt, die vom niedrigsten Tier bewältigt wird.

Bei beiden Ausführungsformen sollten zwischen Gestell 18 bzw. dessen Wippe 22 einerseits und dem vibrierenden Bürstenrahmen 14 andererseits schwingungsdämpfende Elemente angeordnet sein, damit die Vibrationen nicht erst auf das Gestell 18 und dann auf die dieses tragende Stallwand übertragen werden.

Im ersten Ausführungsbeispiel könnte statt der Wippe 22 der Rahmenschenkel 14v selbst schwenkbar gelagert sein, wobei ggf. zwischen seiner Schwenkachse und dem Gestell 18 die schwingungsdämpfenden Elemente anzuordnen wären, die funktionslos sind, wenn der Vibrator 16 von Hand ausgeschaltet ist, um dem Tier Gelegenheit zu geben, sich selbst innerhalb des dann nicht schwingenden Rahmens 14 an den Bürsten 10 zu reiben, wofür eine hohe Rückstellkraft der Feder 26 zweckmäßig ist.

## Patentansprüche

1. Viehputzeinrichtung mit einer Bürstvorrichtung an einer wand- oder pfostenfesten Lagervorrichtung und einem im Wesentlichen L-förmigen Rahmen mit zwei Schenkeln zur Anordnung einer ungefähr vertikalen Bürste bzw. einer ungefähr waagrechten Bürste, und mit einem elektromotorischen Antrieb der Bürsten, **gekennzeich net durch** rahmenfeste flache Bürsten (10w und 10v) und einen Vibrator (16) zum Antrieb des Rahmens (14).

2. Einrichtung nach Anspruch 1, **dadurch gekennzeichnet, dass** der L-förmige Rahmen (14) am unteren Ende seines ungefähr vertikalen Schenkels (14v) begrenzt schwenkbar an einem Gestell (18) angeordnet ist und ein Anheben des ungefähr waagrechten Rahmen-Schenkels (14w) den Vibrator (16) einschaltet.

3. Einrichtung nach Anspruch 2, **dadurch gekennzeichnet, dass** zwischen dem vertikalen Rahmenschenkel (14v) und dem Gestell (18) eine Feder (26) mit einer einstellbaren Trennkraft wirksam ist.

4. Einrichtung nach Anspruch 1, **dadurch gekennzeichnet, dass** der L-förmige Rahmen (14) im Wesentlichen vertikal begrenzt verschiebbar an einem Gestell (18) angeordnet ist und ein Anheben des ungefähr waagrechten Rahmen-Schenkels (14w) den Vibrator (16) einschaltet.

5. Einrichtung nach Anspruch 4, **dadurch gekennzeichnet, dass** der L-förmige Rahmen (14) mit einem am Gestell (18) hängenden Gegengewicht (32) versehen ist.
